# EUROPÄISCHE PATENTSCHRIFT

(11) **EP 3 911 771 B1**
(45) Veröffentlichungstag und Bekanntmachung des Hinweises auf die Patenterteilung: **06.08.2025**
(21) Anmeldenummer: 20700169.4
(22) Anmeldetag: 13.01.2020
(51) Int. Cl.: C21D 9/60, H05B 6/04, H05B 6/06, H05B 6/36

(54) **VORRICHTUNG ZUR INDUKTIVEN ERWÄRMUNG EINES WERKSTÜCKS IN EINER WALZANLAGE**
DEVICE FOR THE INDUCTIVE HEATING OF A WORKPIECE IN A ROLLING MILL
DISPOSITIF DE CHAUFFAGE PAR INDUCTION D'UNE PIÈCE DANS UN LAMINOIR

(30) Priorität: 14.01.2019 AT 500222019; 07.05.2019 EP 19172983
(43) Veröffentlichungstag der Anmeldung: 24.11.2021
(73) Patentinhaber: Primetals Technologies Austria GmbH, 4031 Linz (AT)
(72) Erfinder: FÜRST, Heinz, 4210 Gallneukirchen (AT); LENGAUER, Thomas, 4616 Weißkirchen a.d. Traun (AT); LINZER, Bernd, 4621 Leombach (AT); ZAHEDI, Michael, 4502 St. Marien (AT)
(74) Vertreter: Metals@Linz
(86) Internationale Anmeldenummer: PCT/EP2020/050642
(87) Internationale Veröffentlichungsnummer: WO 2020/148202

(56) Entgegenhaltungen:
- EP-A1- 3 025 799
- DE-B- 1 246 846
- DE-T2- 3 751 460
- JP-A- H02 207 481
- KR-A- 20110 040 000
- US-A1- 2018 288 833

## Beschreibung

Die Erfindung betrifft eine Vorrichtung zur induktiven Erwärmung eines Werkstücks in einer Walzanlage.

Aus der DE 42 34 406 A1 ist eine Vorrichtung zur induktiven Querfelderwärmung von Flachgut bekannt, wobei mehrere, sich gegenüberliegende Induktionsschleifen oberhalb und unterhalb des Flachgutes angeordnet sind und einige Induktionsschleifen die Kanten des Flachgutes überragen, während andere Induktionsschleifen innerhalb der Flachgut-Breite enden. Es ist mindestens ein aus zwei unabhängig voneinander in ihrer Position bezüglich des Flachgutes einstellbaren Induktionsmoduln bestehendes Induktionsmodulpaar vorgesehen. Jedes Induktionsmodul weist zwei sich gegenüberliegende, in ihrer Geometrie und ihren Abmessungen nicht veränderbare U-förmige Induktionsschleifen auf, deren Basisschenkel derart positionierbar sind, dass sie mindestens eine vorgebbare Strecke vor der einen Kante des Flachgutes und innerhalb der Flachgut-Breite enden und deren beide Seitenschenkeln derart positionierbar sind, dass sie mindestens eine vorgebbare Strecke über die andere Kante des Flachgutes ragen. Die Induktionsschleifen der beiden Induktionsmoduln eines Induktionsmodulpaares sind nach entgegengesetzt gerichteten Seiten hin geöffnet, wodurch jede Kante des Flachgutes von den Seitenschenkeln lediglich einer Induktionsschleife überragt wird.

DE 37 51 460 T2 (MEIDENSHA ELECTRIC MFG CO LTD [JP]) 25. Januar 1996 (1996-01-25) beschreibt eine Induktionsheizvorrichtung, um induktiv ein Werkstück wie einen Metallstreifen oder ein Metallblech zu erwärmen.

Der Erfindung liegt die Aufgabe zugrunde, eine verbesserte Vorrichtung zur induktiven Erwärmung eines Werkstücks in einer Walzanlage anzugeben.

Die Aufgabe wird erfindungsgemäß gelöst durch eine Vorrichtung mit den Merkmalen des Anspruchs 1.

Vorteilhafte Ausgestaltungen der Erfindung sind Gegenstand der Unteransprüche.

Erfindungsgemäß umfasst die Vorrichtung zur induktiven Erwärmung eines Werkstücks in einer Walzanlage:
- einen Umrichter zur Erzeugung einer Wechselspannung,
- eine mit dem Umrichter elektrisch verbundene Kondensatorbank, umfassend eine Mehrzahl einander parallel geschalteter Kondensatoren,
- ein Arbeitsfeld, in dem eine obere Spule und eine untere Spule angeordnet sind, wobei das Werkstück zwischen den Spulen hindurch bewegbar ist und dabei durch Querfelderwärmung induktiv erwärmt wird,
- ein neben, unterhalb oder oberhalb dem Arbeitsfeld angeordnetes Gehäuse, wobei der Umrichter und die Kondensatorbank im Gehäuse angeordnet sind,
- wobei die Spulen über ein jeweiliges flexibles Kabel elektrisch mit der Kondensatorbank verbunden sind,
- wobei die Kabel als Koaxialkabel ausgebildet sind, wobei eine Phase der Wechselspannung auf einem Innenleiter und die andere Phase der Wechselspannung auf einem Außenleiter des Koaxialkabels anliegt, und
- wobei die Kabel durch ein Fluid, wie Luft oder Wasser, gekühlt sind.

Bei der Walzanlage handelt es sich **z.B.** um eine Gieß-Walz-Verbundanlage, vorzugsweise vom Typ Arvedi ESP, mit einer Stranggießmaschine und zumindest einer, bevorzugt zwei - nämlich einer Vorwalz- und einer Fertigwalzstraße - Warmwalzstraße. Beim Werkstück handelt es sich typischerweise um ein Flachmaterial, **z.B.** eine Dünn- oder Mittelbramme aus Stahl oder ein sog. Vorband, welches durch Vorwalzen aus der Dünn- oder Mittelbramme gewalzt wurde. Die Dicke des Vorbands beträgt typischerweise zwischen 4 und 55 mm**,** vorzugsweise zwischen 6 und 45 mm**,** besonders bevorzugt zwischen 8 und 20 mm. Die Breite des Werkstücks beträgt zwischen 600 und 2400 mm.

Bei bekannten Lösungen zur induktiven Erwärmung mittels Längsfeld ist durch die Wirkung und Bauweise dieser Technologie eine Querbewegung der Spulen nicht möglich und nicht erforderlich. Da die Spulen fix in der Anlage montiert sind, kann die Spannungsversorgung von der Kondensatorbank zu den Spulen mittels Stromschienen erfolgen.

Bei induktiver Erwärmung mittels Querfeldtechnologie ist es aus Prozessgründen vorteilhaft, die Spulen quer zur Bandlaufrichtung zu verschieben. Dies gilt insbesondere bei unterschiedlichen Breiten des Flachgutes; beispielsweise ist dieser Vorgang in der WO 2004/103595 A1 beschrieben. Daher sind die Kondensatoren üblicherweise auf den Spulenwagen montiert, um einerseits die Verbindungslänge zwischen Kondensatoren und Spulen so kurz wie möglich zu halten, da in diesem Bereich die höchsten Ströme fließen und somit die größten Verluste im Leiter und damit auch die größte Wärmebelastung des Leiters auftreten. Aus diesem Grund sowie aufgrund der erforderlichen Querbewegung der Spulen ist es üblich, die Kondensatoren auf dem Spulenwagen zu montieren, damit die Spannungsversorgung zwischen den Kondensatoren und den Spulen mittels Stromschienen mit großen Querschnitten und kurzen Wegen erfolgen kann.

Gegenüber bekannten Lösungen, bei denen die Kondensatoren in der Nähe der Spulen außerhalb des Gehäuses angeordnet sind, ist die Kondensatorbank bei der erfindungsgemäßen Lösung durch die Anordnung in einem Gehäuse vor heißer Luft, Staub, Strahlungshitze, Dampf und Wasser geschützt. Das Gehäuse ist erfindungsgemäß neben, oberhalb oder unterhalb des Arbeitsfelds angeordnet. Beispielsweise kann das Gehäuse als ein Elektroraum ausgebildet sein, der sich auf platzsparende Weise unterhalb oder oberhalb der Walzanlage befindet. Die Umrichter und die Kondensatorbank sind innerhalb des Gehäuses für Wartungszwecke leicht zugänglich.

Im Betrieb der Walzanlage wird das Werkstück, **z.B.** ein Flachband mit einer Dicke von 18 mm und einer Breite von 1800 mm, in Längsrichtung durch das Arbeitsfeld transportiert und dabei durch die Spulen mittels Querfelderwärmung induktiv erwärmt. Um das Werkstück auf Walztemperatur zu bringen sind mehrere (z.B. 4 bis 16) Spulen in Materialflussrichtung hintereinander angeordnet.

In einer Ausführungsform sind der Umrichter und die Kondensatorbank innerhalb des Gehäuses über mindestens zwei Stromschienen elektrisch miteinander verbunden.

Die Verwendung der Stromschienen zur Verbindung der Kondensatorbank zum Umrichter ist möglich, da keine Relativbewegung zwischen Kondensatorbank und Umrichter erforderlich ist. Auf diese Weise kann auf lange Kabelverbindungen an dieser Stelle verzichtet werden, wodurch elektrische Verluste reduziert werden.

In einer Ausführungsform sind die Spulen gemeinsam in einem Spulenwagen angeordnet. Dadurch können die Spulen im Falle einer Störung der Walzanlage rasch vom Werkstück entfernt bzw. ausgefahren werden.

In einer Ausführungsform klimatisiert ein Klimagerät bzw. eine Klimaanlage das Innere des Gehäuses. Auf diese Weise sind der Umrichter und die Kondensatorbank in einem sauberen, trockenen und klimatisierten Umfeld untergebracht und vor Hitze aus der Walzanlage aktiv geschützt.

Gemäß der Erfindung sind die Kabel als Koaxialkabel ausgebildet, wobei eine Phase der Wechselspannung auf einem Innenleiter und die andere Phase der Wechselspannung auf einem Außenleiter des Koaxialkabels anliegt.

Das Koaxialkabel verringert ein magnetisches Streufeld, sodass die elektromagnetische Verträglichkeit mit Geräten in der Umgebung verbessert wird.

Erfindungsgemäß werden die Kabel durch ein Fluid, wie Luft oder Wasser, gekühlt. Durch diese nicht passive aber aktive Kühlung wird der Wärmeübergang zwischen dem Kabel und dem Fluid erhöht bzw. verbessert. Im Gegensatz dazu gibt ein "passiv gekühltes" Kabel natürlich auch Wärme an die Umgebungsluft ab, z.B. durch freie bzw. natürliche Konvektion. Bei der aktiven Kühlung wird der Wärmeübergang vom Kabel an das Fluid durch eine erzwungene Kühlung stark erhöht, z.B. durch einen Lüfter zum Anblasen des Kabels mit Luft oder durch das Durchströmen des Koaxialkabels mit einem Kühlfluid, vorzugsweise ein flüssiges Kühlmittel bzw. ein Kühlwasser. Auf diese Weise kann der elektrische Widerstand des Kabels und die Hitzeentwicklung verringert und der Stromfluss bei gleichem Leitungsquerschnitt erhöht werden. Nach einer vorteilhaften Ausführungsform gibt das Kabel Wärme an das Fluid, z.B. Kühlwasser, ab und das Kühlwasser gibt die Wärme, bspw. über einen Wärmetauscher, an die Umgebung oder ein anderes Medium ab.

Beim Kühlwasser ist es günstig, ein de-ionisiertes Wasser, de-mineralisiertes oder zumindest ein destilliertes Wasser zu verwenden, da diese Kühlmedien eine deutlich niedrigere Leitfähigkeit bzw. eine höhere elektr. Isolierwirkung haben. Nach der Abgabe der Wärme kann das Kühlwasser im Kühlkreis erneut Wärme aufnehmen.

In einer Ausführungsform umfasst der Spulenwagen mindestens ein, bevorzugt zwei oder vier, Höhen-Stellglied (z.B. ein hydraulisches, pneumatisches oder elektromechanisches Höhen-Stellglied) zur Höhenverstellung der Spulen gegenüber dem Werkstück. Auf diese Weise kann ein Abstand zwischen den Spulen und dem Werkstück eingestellt bzw. der Abstand auch bei unterschiedlichen Werkstückdicken konstant gehalten werden; dadurch wird der Wirkungsgrad der Induktionsheizung erhöht.

Vorzugsweise wird der Abstand zwischen der oberen Spule und der Oberseite sowie zwischen der unteren Spule und der Unterseite des Werkstücks auf den gleichen Wert eingestellt.

In einer Ausführungsform ist mindestens ein Quer-Stellglied, beispielsweise ein hydraulischer, pneumatischer oder elektromechanischer Aktuator, zum Verfahren des Spulenwagens in einer Querrichtung des Werkstücks, **z.B.** vom Gehäuse weg oder zu diesem hin, vorgesehen.

In einer Ausführungsform ist das Quer-Stellglied an einer den Kabeln abgewandten Seite des Spulenwagens angeordnet. Auf diese Weise kann der verfügbare Platz, die Zugänglichkeit und die Wartungsfreundlichkeit verbessert werden.

In einer Ausführungsform sind die Kabel auf einer dem Gehäuse zugewandten Seite des Spulenwagens an die Spulen angeschlossen. Auf diese Weise kann die Länge der Kabel minimiert und elektrische Verluste verringert werden.

Da Umrichter empfindlicher sind als Kondensatoren, ist es vorteilhaft, den Umrichter in einem Umrichterschrank anzuordnen, der sich innerhalb des Gehäuses befindet.

Im Falle einer Fehlfunktion des Umrichters bzw. der Kondensatorbank kann es zu einem Störlichtbogen kommen. Um den dadurch im Inneren des Gehäuses entstehenden Überdruck nach Außen abführen zu können, ist es vorteilhaft, wenn das Gehäuse mit einem Schacht verbunden ist, sodass der Überdruck über den Schacht nach außen, vorzugsweise außerhalb des Gebäudes, abgeführt werden kann. Dadurch werden durch den Störlichtbogen eventuell freiwerdende giftige Dämpfe von der Walzanlage bzw. der Bedienmannschaft ferngehalten.

Vorzugsweise ist der Schacht im Normalbetrieb mit einer Explosionsklappe verschlossen, wobei die Explosionsklappe nur im Falle eines Störlichtbogens öffnet. Dadurch kann das Gehäuse trotz des Schachtes klimatisiert werden.

Es können mehrere Umrichter und jeweils verbundene Kondensatorbänke in ein und demselben Gehäuse angeordnet sein. Ebenso können mehrere Sätze von Spulen in jeweiligen Spulenwagen vorgesehen sein, die an jeweils eine dieser Kondensatorbänke angeschlossen sind. Diese Sätze von Spulen können nacheinander in Bandlaufrichtung angeordnet sein, so dass das Werkstück sie nacheinander passiert. Zwischen aufeinanderfolgenden Sätzen von Spulen kann jeweils eine oder mehrere Rollgangsrolle vorgesehen sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: eine schematische Ansicht einer ersten Vorrichtung zur induktiven Erwärmung eines Werkstücks,
- FIG 2: eine schematische Ansicht einer zweiten Vorrichtung zur induktiven Erwärmung eines Werkstücks,
- FIG 3: eine schematische Ansicht einer dritten Vorrichtung zur induktiven Erwärmung eines Werkstücks,
- FIG 4: eine schematische Ansicht eines Querschnitts durch ein wassergekühltes Koaxialkabel, und
- FIG 5: ein Schema zur aktiven Wasserkühlung eines Koaxialkabels.

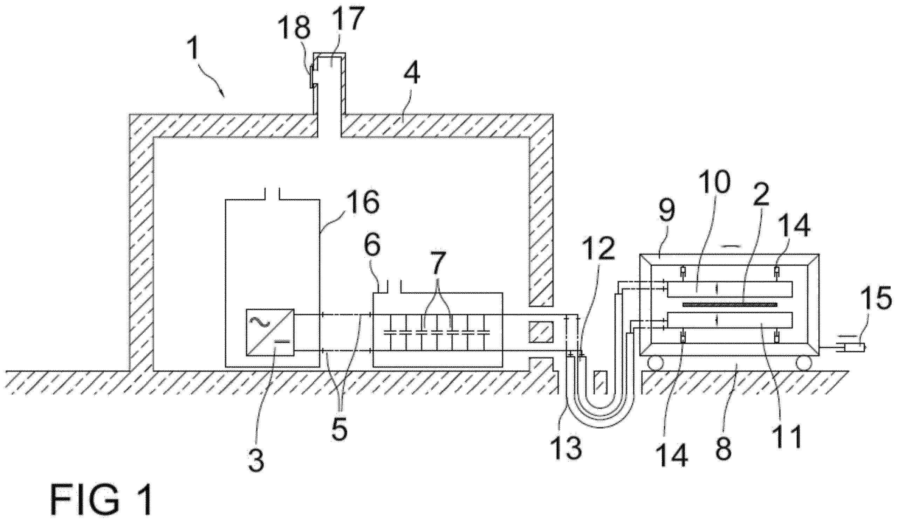

Figur 1 zeigt eine schematische Ansicht einer Vorrichtung 1 zur induktiven Erwärmung eines metallischen Werkstücks 2, insbesondere eines Flachguts, in einer Walzanlage. Die Vorrichtung 1 umfasst einen Umrichter 3 zur Erzeugung einer insbesondere zweiphasigen Wechselspannung mit einer bestimmten Frequenz und einer bestimmten Amplitude. Der Umrichter 3 ist in einem fest angeordneten Gehäuse 4 neben der Walzanlage untergebracht. Die Wechselspannung aus dem Umrichter 3 wird über zwei Stromschienen 5 einer Kondensatorbank 6, umfassend eine Mehrzahl einander parallel geschalteter Kondensatoren 7, zugeführt. Die Kondensatorbank 6 ist ebenfalls innerhalb des Gehäuses 4 angeordnet. Das Innere des Gehäuses 4 kann klimatisiert, insbesondere gekühlt, sein. Außerdem ist das Gehäuse z.B. durch eine Tür oder ein anderes Zutrittssystem gesichert, sodass unbefugte Personen keinen Zugang zu den elektrischen Vorrichtungen im Inneren des Gehäuses 4 erhalten.

Auf diese Weise sind der Umrichter3 und die Kondensatorbank 6 in einem sauberen, trockenen und klimatisierten Umfeld untergebracht und vor Hitze aus der Walzanlage geschützt.

Die Verwendung der Stromschienen 5 zur Verbindung der Kondensatorbank 6 zum Umrichter 3 ist möglich, da keine Relativbewegung zwischen Kondensatorbank 6 und Umrichter 3 erforderlich ist. Auf diese Weise kann auf lange Kabelverbindungen an dieser Stelle verzichtet werden, wodurch elektrische Verluste reduziert werden.

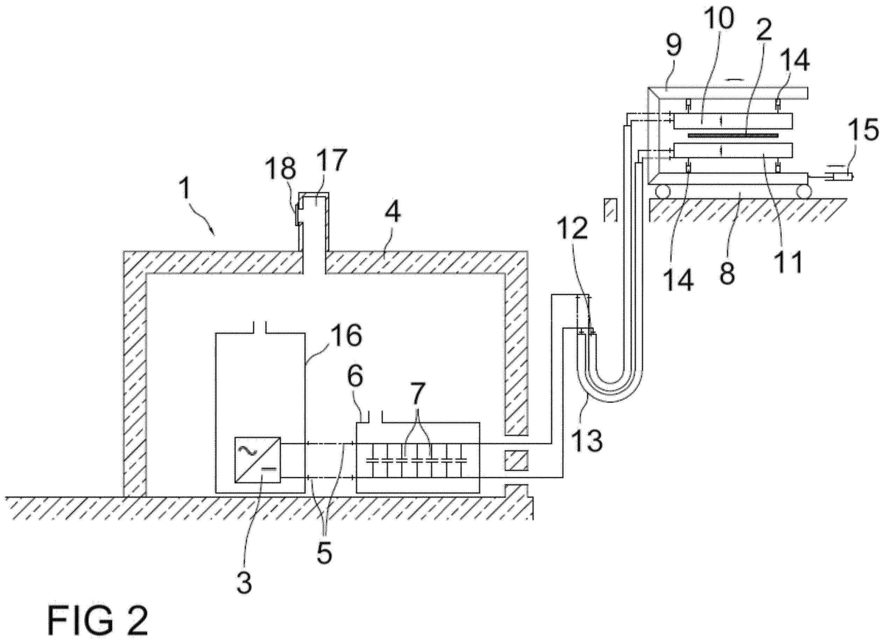

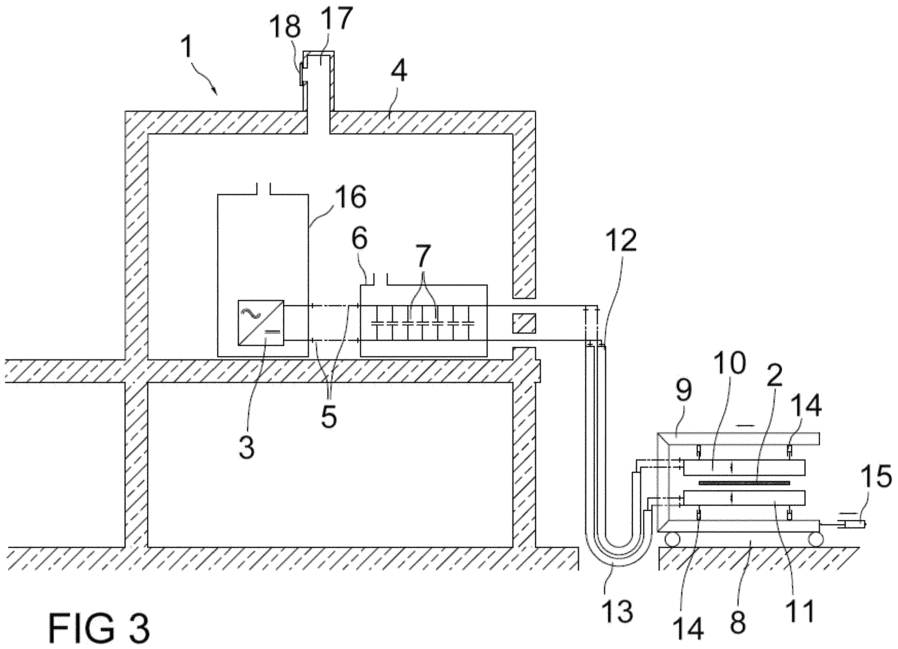

Das Gehäuse 4 ist so wie dargestellt neben einem Arbeitsfeld 8 bzw. einem Spulenwagen 9 der Walzanlage zum Walzen von Flachgut angeordnet. Ebenso gut wäre es möglich, dass sich das Gehäuse 4 unterhalb (siehe FIG 2) oder oberhalb (siehe FIG 3) des Arbeitsfeldes 8 bzw. des Spulenwagens 9 befindet; das Gehäuse kann neben einem Horizontalversatz auch einen Vertikalversatz zum Arbeitsfeld 8 bzw. Spulenwagen 9 aufweisen. In dem Arbeitsfeld 8 ist ein Spulenwagen 9 angeordnet. Im Spulenwagen 9 sind eine obere Spule 10 und eine untere Spule 11 angeordnet, zwischen denen das Werkstück 2 hindurchbewegt werden kann. Die Bewegungsrichtung des Werkstücks 2 in Figur 1 ist senkrecht zur Bildebene, das heißt zum Betrachter hin oder vom Betrachter weg. Die Spulen 10, 11 sind über ein jeweiliges flexibles Kabel 12, 13 elektrisch mit der Kondensatorbank 6 verbunden. In der gezeigten Ausführungsform sind die Stromschienen 5 über die Kondensatorbank 6 hinaus bis aus dem Gehäuse 4 herausgeführt und die Kabel 12, 13 außerhalb des Gehäuses 4 an die Stromschienen 5 angeschlossen.

Die flexiblen Kabel 12, 13 ermöglichen eine Relativbewegung der angeschlossenen Spulen 10, 11 gegenüber dem Gehäuse 4.

In einer nicht dargestellten alternativen Ausführungsform können die Kabel 12, 13 in das Gehäuse 4 hineingeführt und dort an die Kondensatorbank 6 angeschlossen sein.

In einer nicht dargestellten alternativen Ausführungsform ist ein gemeinsames Kabel zum Anschluss beider Spulen 10, 11 an die Kondensatorbank 6 vorgesehen.

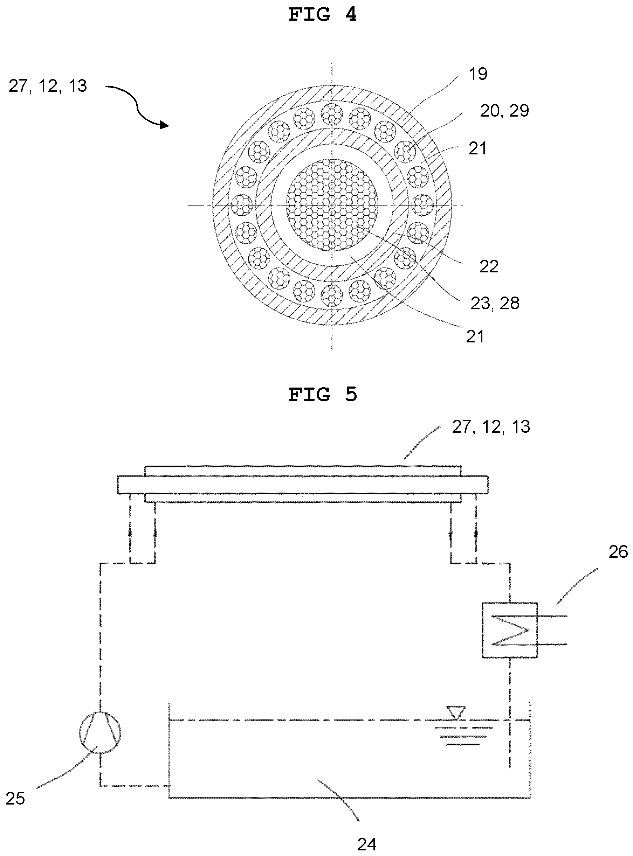

Die Kabel 12, 13 können als Koaxialkabel (siehe FIG 4) ausgebildet sein, wobei eine Phase der Wechselspannung auf einem Innenleiter und die andere Phase der Wechselspannung auf einem Außenleiter anliegt. Ferner können die Kabel 12, 13 wassergekühlt sein. Auf diese Weise kann der elektrische Widerstand des Kabels 12, 13 und die Hitzeentwicklung verringert und der Stromfluss erhöht werden. Das Koaxialkabel verringert ein magnetisches Streufeld, so dass die elektromagnetische Verträglichkeit mit Geräten in der Umgebung verbessert wird.

Die Spulen 10, 11 sind innerhalb des Spulenwagens 9 höhenverstellbar, beispielsweise durch hydraulische, pneumatische oder elektromechanische Höhen-Stellglieder 14. Auf diese Weise kann ein Abstand zwischen den Spulen 10, 11 und dem Werkstück 2 eingestellt werden. Der Spulenwagen 9 kann als Ganzes in einer Querrichtung quer zur Bewegungsrichtung des Werkstücks 2, das heißt vom Gehäuse 4 weg oder zu diesem hin, verfahren werden, beispielsweise durch mindestens ein hydraulisches, pneumatisches oder elektromechanisches Quer-Stellglied 15. Dieses ist beispielsweise an einer vom Gehäuse 4 abgewandten Seite des Spulenwagens 9 angeordnet; der Spulenwagen 9 wird über Räder verfahren. Auf diese Weise kann der verfügbare Platz, die Zugänglichkeit und die Wartungsfreundlichkeit verbessert werden.

In einer Ausführungsform sind die Kabel 12, 13 auf der dem Gehäuse 4 zugewandten Seite des Spulenwagens 9 an die Spulen 10, 11 angeschlossen. Auf diese Weise kann die Länge der Kabel 12, 13 minimiert und elektrische Verluste entsprechend verringert werden. Ebenso können weitere Medienanschlüsse, beispielsweise für Druckluft, Wasser und/oder Hydraulik, auf dieser Seite des Spulenwagens 9 vorgesehen sein.

In einer in den Figuren 2 und 3 dargestellten Ausführungsform ist der Spulenwagen 9 einseitig offen ausgeführt, sodass dieser auch während des Durchlaufs des Bandes komplett aus der Anlage ausfahrbar ist. Ebenso kann der Spulenwagen 9 in Produktionspausen aus der Anlage ausgefahren werden, um dort die Spulen 10, 11 einfach zu tauschen. Es können Schnellkupplungen für die Kabel 12, 13 vorgesehen sein, um sie auf einfache Weise von den Spulen 10, 11 zu trennen.

Die Vorrichtung 1 kann in der Walzanlage, z.B. einer Gieß-Walz-Verbundanlage vom Typ Arvedi ESP, beispielsweise zwischen zwei Walzstufen, d.h**.** zwischen der Vor- und der Fertigwalzstraße, angeordnet sein.

Falls es im Umrichter 3 oder in der Kondensatorbank 6 zu einem Störlichtbogen kommt, wird der Überdruck im Inneren des Gehäuses 4 durch einen Schacht 17 nach außen abgeführt. Dadurch werden u.U**.** giftige Dämpfe von der Walzanlage bzw. der Bedienmannschaft ferngehalten. Der Schacht 17 ist durch eine Explosionsklappe 18 verschlossen, sodass das Gehäuse 4 problemlos klimatisiert werden kann.

Die Figuren 2 und 3 zeigen jeweils eine schematische Ansicht einer zweiten und dritten Vorrichtung 1 zur induktiven Erwärmung eines metallischen Werkstücks 2, wobei die Gehäuse 4 in FIG 2 unterhalb und in FIG 3 oberhalb des Arbeitsfeldes 8 angeordnet sind. Die Spulenwägen 9 in den FIG 2 und 3 sind auf einer Seite offen ausgeführt, sodass der Spulenwagen 9 seitlich ausgefahren werden kann, um z.B. eine Störung in der Walzanlage zu beheben.

Die Figur 4 zeigt schematisch einen Querschnitt durch ein Kabel 12, 13, nämlich ein wassergekühltes Koaxialkabel 27. Der Innen- und der Außenleiter 28, 29 des Kabels besteht aus inneren und äußeren Drähten 23, 20, typischerweise aus Kupfer oder einer Kupferlegierung. Das Kabel 12, 13 ist gegenüber der Umgebung durch eine äußere Kabelhülle 19 isoliert. Um Wärme aus den Innen- und Außenleitern 28, 29 abführen zu können, werden die Räume zwischen der äußeren Kabelhülle 19 und der Zwischenhülle 22 sowie zwischen der Zwischenhülle 22 und dem Innenleiter 28 durch ein Kühlfluid, hier Kühlwasser 21, durchflossen.

Die Figur 5 zeigt ein Schema für einen Kühlkreislauf zur aktiven Wasserkühlung eines flexiblen Koaxialkabels 27, 12, 13 aus FIG 4. Das Kühlwasser wird aus einem Wassertank 24 über eine Wasserpumpe 25 dem Koaxialkabel 27, 12, 13 zugeführt und kühlt das Kabel. Nach dem Durchströmen des Kabels wird das Kühlwasser durch einen Wärmetauscher, z.B. ein Wasser-Luft Wärmetauscher, oder ein Wasser-Wasser Wärmetauscher, gekühlt und wieder dem Wassertank zugeführt.

Das Kühlwasser ist typischerweise ein flüssiges, wasserbasiertes Kühlmittel mit Zusätzen, um die elektrische Isolierwirkung und die Alterungsbeständigkeit des Kühlwassers zu verbessern.

### Bezugszeichenliste

- 1: Vorrichtung
- 2: Werkstück
- 3: Umrichter
- 4: Gehäuse
- 5: Stromschiene
- 6: Kondensatorbank
- 7: Kondensator
- 8: Arbeitsfeld
- 9: Spulenwagen
- 10: obere Spule
- 11: untere Spule
- 12: Kabel
- 13: Kabel
- 14: Höhen-Stellglied
- 15: Quer-Stellglied
- 16: Umrichterschrank
- 17: Schacht
- 18: Explosionsklappe
- 19: äußere Kabelhülle
- 20: äußere Drähte
- 21: Kühlwasser
- 22: Zwischenhülle
- 23: innere Drähte
- 24: Wassertank
- 25: Wasserpumpe
- 26: Wärmetauscher
- 27: Koaxialkabel
- 28: Innenleiter
- 29: Außenleiter

## Patentansprüche

1. Vorrichtung (1) zur induktiven Erwärmung eines Werkstücks (2) in einer Walzanlage, wobei die Vorrichtung (1) umfasst:
- einen Umrichter (3) zur Erzeugung einer Wechselspannung,
- eine mit dem Umrichter (3) elektrisch verbundene Kondensatorbank (6), umfassend eine Mehrzahl zueinander parallel geschalteter Kondensatoren (7),
- ein Arbeitsfeld (8), in dem eine obere Spule (10) und eine untere Spule (11) angeordnet sind, wobei das Werkstück (2) zwischen den Spulen (10, 11) hindurch bewegbar ist und dabei durch Querfelderwärmung induktiv erwärmt wird,
- ein neben, unterhalb oder oberhalb des Arbeitsfelds (8) angeordnetes Gehäuse (4), wobei der Umrichter (3) und die Kondensatorbank (6) im Gehäuse (4) angeordnet sind,
- wobei die Spulen (10, 11) über ein jeweiliges flexibles Kabel (12, 13) elektrisch mit der Kondensatorbank (6) verbunden sind,
- wobei die Kabel (12, 13) als Koaxialkabel (27) ausgebildet sind, wobei eine Phase der Wechselspannung auf einem Innenleiter (28) und die andere Phase der Wechselspannung auf einem Außenleiter (29) des Koaxialkabels (27) anliegt, und
- wobei die Kabel (12, 13) durch ein Fluid, wie Luft oder Wasser (21), gekühlt sind.

2. Vorrichtung (1) nach Anspruch 1, wobei der Umrichter (3) und die Kondensatorbank (6) über mindestens zwei Stromschienen (5) elektrisch miteinander verbunden sind.

3. Vorrichtung (1) nach einem der Ansprüche 1 oder 2, wobei die Spulen (10, 11) gemeinsam in einem Spulenwagen (9) angeordnet sind.

4. Vorrichtung (1) nach einem der Ansprüche 1 bis 3, wobei ein Klimagerät das Innere des Gehäuses (4) klimatisiert.

5. Vorrichtung (1) nach einem der Ansprüche 3 bis 4, wobei der Spulenwagen (9) mindestens ein Höhen-Stellglied (14) zur Höhenverstellung der Spulen (10, 11) gegenüber dem Werkstück (2) umfasst.

6. Vorrichtung (1) nach einem der Ansprüche 3 bis 5, wobei der Spulenwagen (9) mindestens ein Quer-Stellglied (15) zum Verfahren des Spulenwagens (9) in einer Querrichtung des Werkstücks (2) umfasst.

7. Vorrichtung (1) nach Anspruch 6, wobei das Quer-Stellglied (15) an einer den Kabeln (12, 13) abgewandten Seite des Spulenwagens (9) angeordnet ist.

8. Vorrichtung (1) nach einem der Ansprüche 3 bis 7, wobei die Kabel (12, 13) auf einer dem Gehäuse (4) zugewandten Seite des Spulenwagens (9) an die Spulen (10, 11) angeschlossen sind.

9. Vorrichtung (1) nach einem der vorhergehenden Ansprüche, wobei der Umrichter (3) in einem Umrichterschrank (16) angeordnet ist und sich der Umrichterschrank (16) innerhalb des Gehäuses (4) befindet.

10. Vorrichtung (1) nach einem der vorhergehenden Ansprüche, wobei das Gehäuse (4) mit einem Schacht (17) verbunden ist, sodass im Fall eines Störlichtbogens ein Überdruck im Inneren des Gehäuses (4) über den Schacht (17) nach außen abgeführt werden kann.

11. Vorrichtung (1) nach Anspruch 10, wobei der Schacht (17) im Normalbetrieb mit einer Explosionsklappe (18) verschlossen ist.

## Claims

1. Device (1) for the inductive heating of a workpiece (2) in a rolling mill, wherein the device (1) comprises:
- a converter (3) for producing an alternating voltage,
- a capacitor bank (6) electrically connected to the converter (3) and comprising a plurality of capacitors (7) connected in parallel,
- a working zone (8), in which an upper coil (10) and a lower coil (11) are arranged, wherein the workpiece (2) can be moved through between the coils (10, 11) and is thereby inductively heated by transverse-field heating,
- a housing (4) arranged next to, below or above the working zone (8), wherein the converter (3) and the capacitor bank (6) are arranged in the housing (4),
- wherein the coils (10, 11) are electrically connected to the capacitor bank (6) by way of a respective flexible cable (12, 13),
- wherein the cables (12, 13) are formed as coaxial cables (27), wherein one phase of the alternating voltage is on an inner conductor (28) and the other phase of the alternating voltage is on an outer conductor (29) of the coaxial cable (27), and
- wherein the cables (12, 13) are cooled by a fluid, such as air or water (21).

2. Device (1) according to Claim 1, wherein the converter (3) and the capacitor bank (6) are electrically connected to one another by way of at least two conductor rails (5).

3. Device (1) according to either of Claims 1 and 2, wherein the coils (10, 11) are arranged together in a coil car (9).

4. Device (1) according to one of Claims 1 to 3, wherein an air-conditioning unit controls the air conditions in the interior of the housing (4).

5. Device (1) according to either of Claims 3 and 4, wherein the coil car (9) comprises at least one height-adjusting element (14) for the height adjustment of the coils (10, 11) with respect to the workpiece (2).

6. Device (1) according to one of Claims 3 to 5**,** wherein the coil car (9) comprises at least one transverse-adjusting element (15) for moving the coil car (9) in a transverse direction of the workpiece (2).

7. Device (1) according to Claim **6,** wherein the transverse-adjusting element (15) is arranged on a side of the coil car (9) that is facing away from the cables (12, 13).

8. Device (1) according to one of Claims 3 to **7,** wherein the cables (12, 13) are connected to the coils (10, 11) on a side of the coil car (9) that is facing the housing (4).

9. Device (1) according to one of the preceding claims, wherein the converter (3) is arranged in a converter cabinet (16) and the converter cabinet (16) is located within the housing (4).

10. Device (1) according to one of the preceding claims, wherein the housing (4) is connected to a shaft (17), so that in the event of an accidental arc an excess pressure in the interior of the housing (4) can be discharged to the outside by way of the shaft (17).

11. Device (1) according to Claim 10, wherein the shaft (17) is closed during normal operation by an explosion flap (18).

## Revendications

1. Dispositif (1) de chauffage par induction d'une pièce à usiner (2) dans un laminoir, dans lequel le dispositif (1) comprend :
- un convertisseur (3) permettant de générer une tension alternative,
- une batterie de condensateurs (6) reliée électriquement au convertisseur (3), comprenant une pluralité de condensateurs (7) commutés en parallèle les uns par rapport aux autres,
- un champ de travail (8) dans lequel sont agencées une bobine supérieure (10) et une bobine inférieure (11), dans lequel la pièce à usiner (2) peut être déplacée entre les bobines (10, 11) et être ainsi chauffée par induction, par chauffage par champ transversal,
- un carter (4) agencé à côté, au-dessous ou au-dessus du champ de travail (8), le convertisseur (3) et la batterie de condensateurs (6) étant agencés dans le carter (4),
- dans lequel les bobines (10, 11) sont reliées électriquement à la batterie de condensateurs (6) par l'intermédiaire d'un câble (12, 13) flexible respectif,
- dans lequel les câbles (12, 13) sont conçus sous la forme de câbles coaxiaux (27), une phase de la tension alternative étant appliquée sur un conducteur intérieur (28) et l'autre phase de la tension alternative étant appliquée sur un conducteur extérieur (29) du câble coaxial (27), et
- les câbles (12, 13) étant refroidis par un fluide tel que de l'air ou de l'eau (21).

2. Dispositif (1) selon la revendication 1, dans lequel le convertisseur (3) et la batterie de condensateurs (6) sont reliés électriquement l'un à l'autre par l'intermédiaire d'au moins deux barres omnibus (5).

3. Dispositif (1) selon l'une quelconque des revendications 1 ou 2, dans lequel les bobines (10, 11) sont agencées ensemble dans un chariot à bobines (9).

4. Dispositif (1) selon l'une quelconque des revendications 1 à 3, dans lequel un climatiseur climatise l'intérieur du carter (4).

5. Dispositif (1) selon l'une quelconque des revendications 3 à 4, dans lequel le chariot à bobines (9) comprend au moins un actionneur de hauteur (14) pour un réglage en hauteur des bobines (10, 11) par rapport à la pièce à usiner (2).

6. Dispositif (1) selon l'une quelconque des revendications 3 à 5, dans lequel le chariot à bobines (9) comprend au moins un actionneur transversal (15) permettant de déplacer le chariot à bobines (9) dans une direction transversale de la pièce à usiner (2).

7. Dispositif (1) selon la revendication 6, dans lequel l'actionneur transversal (15) est agencé sur un côté du chariot à bobines (9) opposé aux câbles (12, 13).

8. Dispositif (1) selon l'une quelconque des revendications 3 à 7, dans lequel les câbles (12, 13) sont reliés aux bobines (10, 11) sur un côté du chariot à bobines (9) tourné vers le carter (4).

9. Dispositif (1) selon l'une quelconque des revendications précédentes, dans lequel le convertisseur (3) est agencé dans une armoire de convertisseur (16) et l'armoire de convertisseur (16) est située à l'intérieur du carter (4).

10. Dispositif (1) selon l'une quelconque des revendications précédentes, dans lequel le carter (4) est relié à un puits (17), de sorte qu'en cas d'arc électrique parasite, une surpression à l'intérieur du carter (4) peut être évacuée vers l'extérieur par le puits (17).

11. Dispositif (1) selon la revendication 10, dans lequel le puits (17) est fermé en fonctionnement normal par un clapet anti-explosion (18).
